Europäisches Patentamt

European Patent Office

Office européen des brevets

(11) Veröffentlichungsnummer: **0 212 130**
**A2**

(12) **EUROPÄISCHE PATENTANMELDUNG**

(21) Anmeldenummer: **86108452.3**

(22) Anmeldetag: **20.06.86**

(51) Int. Cl.⁴: **B 23 P 11/02**

(30) Priorität: **06.08.85 DE 3528133**

(43) Veröffentlichungstag der Anmeldung: **04.03.87**
**Patentblatt 87/10**

(84) Benannte Vertragsstaaten: **AT BE CH DE FR GB IT LI NL SE**

(71) Anmelder: **UNIMA Maschinenbau GmbH, Justus-von-Liebig-Strasse, D-6603 Sulzbach/Saar (DE)**

(72) Erfinder: **Fetsch, Rudolf, Dr., Wiesenstrasse 72, D-6670 St. Ingbert (DE)**

(74) Vertreter: **Patentanwälte Phys. Bartels Dipl.-Ing. Fink Dr.-Ing. Held, Lange Strasse 51, D-7000 Stuttgart 1 (DE)**

(54) **Verfahren und Vorrichtung zum Armieren eines rohrstückförmigen Teils eines Körpers, insbesondere eines Rohres.**

(57) Bei einem Verfahren zum Armieren eines rohrstückförmigen Teils (10) eines Körpers mit einem Armierungszylinder (24), wird zwischen dem rohrstückförmigen Teil und dem Armierungszylinder, die beide koaxial angeordnet sind und von denen der rohrstückförmige Teil einen größeren Durchmesser außen als der Armierungszylinder innen aufweist, ein Druck erzeugt, der mindestens den rohrstückförmigen Teil im Durchmesser verringert und den Armierungszylinder im Durchmesser erweitert. Durch eine Relativbewegung zwischen dem rohrstückförmigen Teil und dem Armierungszylinder wird der Armierungszylinder auf den rohrstückförmigen Teil aufgebracht, auf dem der Armierungszylinder nach Druckentlastung festsitzt. Eine Vorrichtung zur Durchführung des Verfahrens hat ein Montagegehäuse (1) zur koaxialen Aufnahme des rohrstückförmigen Teils (10) und des Armierungszylinders (24), zwei Stützschultern (26, 27) innerhalb des Montagegehäuses zum axialen Festlegen des Armierungszylinders (24), eine mit dem rohrstückförmigen Teil (10) verbundene Montagestange (11) und Druckmittelanschlüsse (33, 34) am Montagegehäuse (1) auf voneinander abgewandten Seiten des rohrstückförmigen Teils und des Armierungszylinders.

0212130

/1

22. Juli 1985/3537
P 7000

Unima Maschinenbau GmbH, Justus-von-Liebig-Straße,
6603 Sulzbach-Neuweiler/Saar

"Verfahren und Vorrichtung zum Armieren eines rohrstückförmigen
Teils eines Körpers, insbesondere eines Rohres"

Die Erfindung bezieht sich auf ein Verfahren entsprechend dem Oberbegriff des Anspruches 1.

Der vorliegenden Erfindung liegt die Aufgabe zugrunde, einen rohrstückförmigen Teil eines Körpers in einfacher Weise mit einem Armierungszylinder zu versehen. Diese Aufgabe wird durch die Merkmale im Kennzeichnungsteil des Anspruches 1 erfindungsgemäß gelöst. Durch Erzeugen eines Druckes zwischen dem rohrstückförmigen Teil und dem Armierungszylinder wird der rohrstückförmige Teil im Durchmesser verringert und der Armierungszylinder wird im Durchmesser erweitert, so daß das Übermaß zwischen dem Außendurchmesser des rohrstückförmigen Teils und dem Innendurchmesser des Armierungszylinders auf einfache Weise überwunden werden kann. Sobald dieses Übermaß überwunden ist, kann durch eine Relativbewegung zwischen dem rohrstückförmigen Teil und dem Armierungszylinder dieser auf den rohrstückförmigen Teil aufgebracht werden. Nach der Druckentlastung sitzt der Armierungszylinder unter Vorspannung auf dem rohrstückförmigen Teil.

Die Merkmale des Anspruches 2 betreffen eine vorteilhafte Vorrichtung zur Durchführung des Verfahrens.

Weitere Vorteile ergeben sich aus den übrigen Ansprüchen, der Beschreibung und der Zeichnung. In dieser ist eine Vorrichtung zum Armieren eines Rohrstückes als Ausführungsbeispiel des Gegenstandes der Erfindung im Längsschnitt schematisch dargestellt. Es zeigen

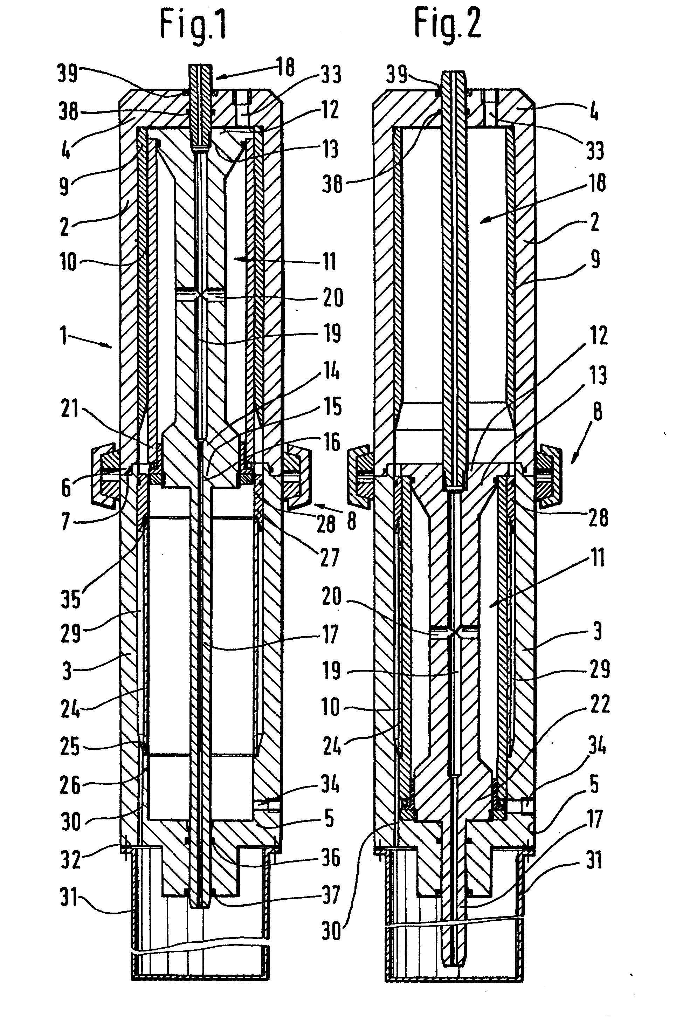

Fig. 1 und 2 jeweils die gleiche Vorrichtung mit unterschiedlichen Lagen von Teilen.

Ein Montagegehäuse 1 hat einen oberen Gehäuseteil 2 und einen unteren Gehäuseteil 3. Die beiden Gehäuseteile 2 und 3 sind jeweils mit einem Boden 4 bzw. 5 versehen und an ihren offenen Seiten mittels einer unterschiedlich dicke Ränder bildenden Abstufung 6 miteinander verbunden, wobei im zylindrischen Teil der Abstufung 6 ein Dichtring 7 vorgesehen ist. Die beiden Gehäuseteile 2 und 3 sind mit einem in einfacher Weise verriegelbaren Schnellverschluß 8 in einfacher Weise miteinander zu verbinden und voneinander zu trennen.

In den oberen Gehäuseteil 2 ist ein Führungszylinder 9 mit geringem Übermaß eingesetzt. Der Führungszylinder 9 ist an seinem oberen äußeren Rand abgeschrägt. Die Mittenbohrung des Führungszylinders 9 ist auf ihrer in der Zeichnung unteren Seite kegelstumpfförmig erweitert. Hierdurch kann ein Rohrstück 10 von der offenen Seite des oberen Gehäuseteiles 2 in einfacher Weise in diesen eingesetzt werden. Das Rohrstück kann an mindestens einem seiner Enden einen nach innen ragenden Flansch aufweisten. Es kann auch ein zylindrischer Teil eines Behälters sein. Der Querschnitt des Rohrstückes oder des zylindrischen Behälterteils kann kreisförmig, oval, mehreckig oder dgl. ausgebildet sein. Zwischen dem Führungszylinder 9 und dem Rohrstück 10 ist geringes Spiel vorhanden. Das Rohrstück 10 ist von einer Montagestange 11 durchsetzt, die in ihrem Montagekopf einen mit dem Rohrstück 10 zusammenwirkenden Anschlagteil 12 und einen in dessen Hohlraum passenden und mit einem Dichtring versehenen Dichtteil 13 hat. An der in der Zeichnung unteren Seite des Rohrstücks 10 befindet sich an der Montagestange 11 ein sich kegelförmig verjüngender Absatz 14, an den sich ein Dichtteil 15 und ein Gewindeteil 16 anschließen. Dem Gewindeteil 16 folgt ein im Durchmesser geringerer Verbindungsteil 17, der den Boden 5 des unteren Gehäuseteiles 3 durchsetzt und geringfügig nach unten übersteht. Zur Einbringung des Verbindungsteiles 17 in den Boden 5 ist die entsprechende Durchgangsbohrung im Boden 5 dem Innern des unteren Gehäuseteiles 3 zu erweitert. Auf der vom unteren Gehäuseteil 3 abgewandten Seite ist in die Montagestange 11 eine einen Bestandteil der Montagestange 11 bildende Verlängerungsstange 18 eingeschraubt. Die Stangen 11 und 18 weisen jeweils eine Mittenbohrung auf. Die Montagestange 11 hat im Bereich des Rohrstücks 10 (zwischen dem Kopfteil 12, 13 und dem Verbindungsteil 17) eine mit der Längsbohrung 19 verbundene Querbohrung 20, die ins Innere des Rohrstücks 10 mündet, so daß das Innere des Rohrstücks mit der Umgebungsluft verbunden ist.

Der untere Teil des Rohrstücks 10 liegt auf der Außenseite eines den Dichtteil 15 der Montagestange 11 umgebenden Stufenringes 21 an, zwischen dem und der Unterseite des Rohrstücks 10 ein Dichtring 22 angeordnet ist. Der Stufenring 21 wird mittels eines auf den Gewindeteil 16 der Montagestange 11 aufgeschraubten Gewinderinges 23 in seiner Lage gehalten.

Im unteren Gehäuseteil 3 befindet sich ein im Querschnitt dem Querschnitt des Rohrstückes 10 angepaßter Armierungszylinder 24, der unter Zwischenlage eines Dichtringes 25 auf einer Schulter 26 im unteren Gehäuseteil 3 aufsteht. Der Armierungszylinder 24 besteht vorzugsweise aus einem Faserverbundwerkstoff, in Form eines in einer Richtung oder kreuzweise gewickelten Körpers, der aus in Harz, insbesondere Polyester, getränkten Fäden aus einem Kunststoff, insbesondere Polyamid, Kohlenstoff oder dgl., gebildet und anschließend im Ofen gehärtet wird.

0212130

22. Juli 1985/3537
P 7000

Am oberen Ende des Armierungszylinders 24 ist eine ebenfalls eine Schulter 27 aufweisende Führungsbüchse 28 vorgesehen, deren Mittenbohrung sich in Richtung zum Armierungszylinder 24 kegelförmig erweitert und deren innerer und äußerer oberer Rand jeweils angeschrägt ist. Die Führungsbüchse 28 sitzt mit geringem Spiel im unteren Gehäuseteil 3, wogegen zwischen dem Armierungszylinder 24 und der Innenwand des unteren Gehäuseteiles 3 ein Zwischenraum 29 vorhanden ist, der über eine Bohrung 30 mit der Umgebungsluft in Verbindung steht.

An dem unteren Gehäuseteil 3 ist eine einen Boden aufweisende Schutzhülse 31 befestigt, zwischen deren nach außen ragendem Flansch und dem unteren Gehäuseteil 3 ein Dichtring 32 angeordnet ist.

Im Boden 4 des oberen Gehäuseteiles 2 befindet sich eine Anschlußbohrung 33 und in der Wand des unteren Gehäuseteils 3 befindet sich im Bereich des Bodens 5 eine Anschlußbohrung 34.

Für das Armieren des Rohrstücks 10 durch den zylindrischen Armierungszylinder 24, dessen Innendurchmesser geringer als der Außendurchmesser des Rohrstücks 10 ist, so daß dieser ein definiertes Übermaß gegenüber dem Innendurchmesser des Armierungszylinders 24 aufweist, wird der Armierungszylinder 24 in den unteren Gehäuseteil 3 eingesetzt und steht unter Zwischenlage des Dichtringes 25 auf der Schulter 26 des unteren Gehäuseteiles 3 auf. Anschließend wird die Führungsbüchse 28 unter Zwischenlage eines Dichtringes 35 auf den Armierungszylinder 24 aufgesetzt. Mittels der Dichtringe 25 und 35 ist der Innenraum des Armierungszylinders 24 gegenüber dem Zwischenraum 29 abgedichtet.

Die Montagestange 11 wird, wie in Fig. 1 dargestellt, in das Rohrstück 10 eingesetzt und durch Befestigen des Gewinderinges 23 wird das Rohrstück 10 auf der Montagestange 11 festgelegt. Das mit der Montagestange 11 versehene Rohrstück 10 wird in den Führungszylinder 9 im oberen Gehäuseteil 2 derart eingesetzt, daß der Anschlagteil 12 am Boden 4 des oberen Gehäuseteils 2 ansteht. Dann wird die Verlängerungsstange 18 in den vom Anschlagteil 12 und dem Dichtteil 13 gebildeten Kopf 12, 13 der Montagestange 11 eingesetzt. Anschließend wird der mit dem Armierungszylinder 24 versehene untere Gehäuseteil 3 über den Verbindungsteil 17 der Montagestange 11 geschoben und dieser wird durch die im Boden 5 befindliche Durchgangsbohrung hindurchgesteckt, die dem Innern zu erweitert ist. Der Spalt zwischen dem Verbindungsteil 17 und dem Boden 5 im unteren Gehäuseteil 3 ist mittels Dichtringen 36, 37 abgedichtet. Entsprechende Dichtringe 38 und 39 dichten den Spalt zwischen dem Boden 4 im oberen Gehäuseteil 2 und der Verlängerungsstange 18 ab. Sobald die beiden Gehäuseteile 2, 3 mit ihrer Abstufung 6 miteinander verbunden sind, wird der Schnellverschluß 8 geschlossen. Die Vorrichtung ist damit betriebsbereit.

Über die Anschlußbohrungen 33 und 34 wird ein Druckmittel, insbesondere Druckflüssigkeit, zugeführt, welches das Rohrstück 10 im Durchmesser verringert und den Innendurchmesser des Armierungszylinders 24 erweitert sowie die Führungsbüchse 28 und den Armierungszylinder 24 samt den dazwischen liegenden Dichtringen 35, 25 axial verspannt. Sobald der Innendurchmesser des Armierungszylinders 24 größer als der Außendurchmesser des Rohrstückes 10 ist, kann der Druckbehälter in Richtung zum Armierungszylinder 24 so weit bewegt werden, daß der Armierungszylinder das Rohrstück 10 umgibt, wie in Fig. 2 dargestellt ist. Gegebenenfalls muß hierbei das Rohrstück 10 eine Drehbewegung ausführen. Beim Einsetzen des Rohrstücks 10 in den Armierungszylinder 24 dient der auf den Gewindeteil 16 der Montagestange 11 aufgeschraubte Gewindering 23 als Anschlag am Boden 5 des unteren Gehäuseteils 3. Nach der Entlastung der Anschlußbohrungen 33, 34 dehnt sich das Rohrstück 10 aus und der Armierungszylinder 24 verringert seinen Durchmesser, so daß dieser mit festem Sitz auf dem Rohrstück 10 sitzt und sich der von der Armierung erwünschte Spannungszustand (Druck-

22. Juli 1985/3537
                                                P 7000

vorspannung in der Wand des Rohrstücks 10 und Zugvorspannung
in der Wand des Armierungszylinders 24 jeweils in Umfangsrichtung) einstellt.

Der rohrstückförmige Teil 10, der Armierungszylinder 24 und
andere zylindrische Teile können einen von einer Kreisform
abweichenden Querschnitt aufweisen, wobei die Querschnitte
der Teile 10, 24 gegenseitig passend ausgebildet sind.

0212130

22. Juli 1985/3537
P 7000

Unima Maschinenbau GmbH, Justust-von-Liebig-Straße,
6603 Sulzbach-Neuweiler/Saar

A n s p r ü c h e

1. Verfahren zum Armieren eines rohrstückförmigen Teils (10) eines Körpers, insbesondere eines Rohres, mit einem Armierungszylinder (24), dadurch g e k e n n - z e i c h n e t, daß zwischen dem rohrstückförmigen Teil und dem Armierungszylinder, die beide koaxial angeordnet sind und von denen der rohrstückförmige Teil einen größeren Durchmesser außen als der Armierungszylinder innen aufweist, ein Druck erzeugt wird, der den rohrstückförmigen Teil im Durchmesser verringert und den Armierungszylinder im Durchmesser erweitert, und daß durch eine Relativbewegung zwischen dem rohrstückförmgien Teil und dem Armierungszylinder der Armierungszylinder auf den rohrstückförmigen Teil aufgebracht wird, auf dem der Armierungszylinder nach Druckentlastung festsitzt.

2. Vorrichtung zur Durchführung des Verfahrens nach Anspruch 1, g e k e n n z e i c h n e t durch ein Montagegehäuse (1) zur koaxialen Aufnahme des rohrstückförmigen Teils (10) und des Armierungszylinders (24), durch zwei Stützschultern (26, 27) innerhalb des Montagegehäuses zum axialen Festlegen des Armierungszylinders (24), durch eine mit dem rohrstückförmigen Teil (10) verbundene Montagestange (11) und durch Druckmittelanschlüsse (33, 34) am Montagegehäuse (1) auf voneinander abgewandten Seiten des
rohrstückförmigen Teils und des Armierungszylinders.

3.    Vorrichtung nach Anspruch 2, dadurch g e k e n n -
z e i c h n e t, daß das Montagegehäuse (1) aus zwei
jeweils mit einem Boden (4, 5) versehenen, hülsenförmigen und fest miteinander verbindbaren Gehäuseteilen (2, 3) gebildet ist, die in ihrem Boden (4,
5) jeweils eine Durchgangsbohrung zur Aufnahme der
den Armierungszylinder (24) durchsetzenden Montagestange (11, 12) aufweisen, und daß eine der Stützschultern (26) an einem der Gehäuseteile (3) und
die andere Stützschulter (27) an einer vom rohrstückförmigen Teil (10) durchsetzbaren und in das Montagegehäuse (1) einsetzbaren Führungsbüchse (28) vorgesehen
sind.

4.    Vorrichtung nach Anspruch 2 oder 3, dadurch g e -
k e n n z e i c h n e t, daß die Montagestange (11)
einen Kopfteil (12, 13) zur Aufnahme des rohrstückförmigen Teils (10) an einem seiner Enden und einen
den rohrstückförmigen Teil am anderen Ende durchsetzenden Verbindungsteil (17) aufweist und daß der
Kopfteil einen mit dem rohrstückförmigen Teil zusammenwirkenden Anschlagteil (12) und der Verbindungsteil
(17) einen Befestigungsabschnitt zur Anbringung eines
mit dem anderen Teil des rohrstückförmigen Teils
(10) zusammenwirkenden Dichtrings (22) hat.

5.    Vorrichtung nach einem der Ansprüche 2 bis 4, dadurch
g e k e n n z e i c h n e t, daß der mit dem rohrstückförmigen Teil (10) zusammenwirkende Dichtteil
(13) des Kopfteiles (12, 13) der Montagestange (11)
und der Verbindungsteil (17) der Montagestange unterschiedliche Durchmesser aufweisen und daß in den Kopfteil eine einen Bestandteil der Montagestange
(11) bildende Verlängerungsstange (18) einbringbar
ist.

6. Vorrichtung nach einem der Ansprüche 4 und 5,
dadurch g e k e n n z e i c h n e t, daß die Montagestange (11) und die Verlängerungsstange (18) jeweils
eine durchgehende Mittenbohrung aufweisen und daß
der in dem zwischen dem Kopfteil (12, 13) und dem
Verbindungsteil (17) der Montagestange liegende Bereich eine in den rohrstückförmigen Teil (10) mündende
Querbohrung (20) aufweist.

7. Vorrichtung nach einem der Ansprüche 2 bis 6, dadurch
g e k e n n z e i c h n e t, daß in dem für die anfängliche Aufnahme des rohrstückförmigen Teils (10)
bestimmten Gehäuseteil (2) des Montagegehäuses (1)
ein zur Aufnahme des rohrstückförmigen Teils (10)
bestimmter Führungszylinder (9) angeordnet ist, dessen
Mittenbohrung sich in dem dem Armierungszylinder
(24) zugewandten Ende kegelstumpfförmig erweitert.

8. Vorrichtung nach einem der Ansprüche 2 bis 7, dadurch
g e k e n n z e i c h n e t, daß der zwischen dem
Montagegehäuse (1) und dem Armierungszylinder (24)
vorhandene Zwischenraum (29) mittels einer Bohrung
(30) nach außen entlüftet ist.

9. Vorrichtung nach einem der Ansprüche 5 bis 8, dadurch
g e k e n n z e i c h n e t, daß die Verlängerungsstange (18) im wesentlichen den gleichen Durchmesser
wie der Verbindungsteil (17) der Montagestange (11)
aufweist.

Fig.1 Fig.2